# EUROPÄISCHE PATENTSCHRIFT

(11) **EP 1 339 993 B1**
(45) Veröffentlichungstag und Bekanntmachung des Hinweises auf die Patenterteilung: **07.09.2005**
(21) Anmeldenummer: 01989510.1
(22) Anmeldetag: 24.11.2001
(51) Int. Cl.: F16C 11/02, F16C 17/10, F16C 33/04, F16C 33/14

(54) **VERFAHREN ZUR HERSTELLUNG EINER BUNDBUCHSE**
METHOD FOR THE PRODUCTION OF A FLANGED SLEEVE
PROCEDE DE FABRICATION D'UNE DOUILLE A COLLERETTE

(30) Priorität: 09.12.2000 DE 10061382
(43) Veröffentlichungstag der Anmeldung: 03.09.2003
(73) Patentinhaber: KS Gleitlager GmbH, 68789 St. Leon-Rot (DE)
(72) Erfinder: GÖTZMANN, Martin, 76228 Karlsruhe (DE); BICKLE, Wolfgang, 68799 Reilingen (DE); IWANSKY, Joachim, 76661 Phillipsburg (DE)
(74) Vertreter: Langöhrig, Angelika Beate
(86) Internationale Anmeldenummer: PCT/EP2001/013675
(87) Internationale Veröffentlichungsnummer: WO 2002/046629

(56) Entgegenhaltungen:
- EP-A- 0 382 170
- DE-A- 2 406 361
- FR-A- 2 102 518
- US-A- 4 796 457
- US-A- 5 609 421

## Beschreibung

Die Erfindung betrifft ein Verfahren zur Herstellung einer Bundbuchse, insbesondere für eine Gleitlagerung, wobei ein Bandmaterial (Platine) entsprechend dem späteren Umfang der Bundbuchse abgelängt wird und der entstehende Bandabschnitt zu einer hohlzylindrischen Buchse mit einer Stoßfuge gerollt wird und nach dem Rollen ein- oder beidseitig ein Bund umgelegt wird, wobei sich die Stoßfuge im Bereich des Bundes zu einem V-förmigen Schlitz erweitert. Ein derartiges Verfahren ist z.B. aus EP-B-0 382 170 bekannt.

Derartige Bundbuchsen finden beispielsweise als Gleitlagerung für zwei sich berührende durch einen Bolzen verbundene Teile eines ebenen Drehgelenks für Türen und Klappen, insbesondere an Kraftfahrzeugen Verwendung.

Bei derartigen Bundbuchsen besteht stets das Problem, daß durch das Fließen des Materials beim Umlegen des mindestens einen Bundes es zu einer ungleichmäßigen Dickenverteilung über den Umfang des Bundes kommt. Beim Umlegen des Materials wird das Bundmaterial, das gegenüber der Stoßfuge liegt, am stärksten gestreckt, wobei das Material des Bundes, das unmittelbar an die Stoßfuge angrenzt, nur eine geringere Streckung durchläuft. Dieser Vorgang entsteht durch das Umbiegen des Bundes in radiale Richtung sowie die Umfangsvergrößerung des Bundes gegenüber dem hohlzylindrischen Buchsenabschnitt.

Im Bereich der Stoßfuge führt dies zu einem Aufweiten der vormals geschlossenen Stoßfuge zu einem V-förmigen Schlitz. Hierdurch ist die Bunddicke im Bereich, der an den Schlitz angrenzt, größer als in den übrigen Bereichen des Bundes. Um ein sauberes zuverlässiges Arbeiten eines Drehgelenkes zu gewährleisten, ist es jedoch notwendig, daß im Rahmen gewisser Toleranzen der Bund an jeder Stelle die gleiche Dicke aufweist.

Es ist daher üblich, daß der Bund im Anschluß an das Umlegen zur Vereinheitlichung der Bunddicke gepreßt wird. Durch diesen Umformvorgang fließt das Material in dem an die Stoßfuge bzw. den V-förmigen Schlitz angrenzenden Bereich des Bundes im wesentlichen radial nach außen, so daß nach dem Preßvorgang der Bund keine im wesentlichen mehr ringförmige Form aufweist. Vielmehr weist der Bund eine kragenartige Form auf, wobei im Bereich der Stoßfuge zwei Spitzen oder Nasen über den Kreisbogen des Außendurchmessers vorstehen.

Hierdurch werden die Eigenschaften des Drehgelenks negativ beeinträchtigt.

Es ist daher Aufgabe der Erfindung, ein Verfahren zum Herstellen einer Bundbuchse bereitzustellen, die hinsichtlich der Bunddicke optimiert ist und wobei der Bund eine im wesentlichen ringförmige Form besitzt.

Die Aufgabe wird durch ein Verfahren mit den Merkmalen des Anspruchs 1 gelöst. Das Anbringen der Ausnehmungen kann dabei vorzugsweise im gleichen Arbeitsschritt mit dem Schneiden des Bandmaterials erfolgen. Denkbar ist jedoch auch, die Ausnehmungen vorher oder nachher anzubringen.

Es ist insbesondere günstig, die Ausnehmungen so anzubringen, daß sie sich von der späteren Stoßfuge, also dem Bereich der Schnittkante des Bandmaterials, über ein gewisses Maß entlang der Längskanten der durch Schneiden entstehenden Bandabschnitte erstrecken.

Insbesondere können an beiden Schnittkanten eines Bandabschnitts Ausnehmungen vorgesehen sein, so daß sich die beiden Ausnehmungen bei gerollter Bolzenbuchse symmetrisch rechts und links von der Stoßfuge erstrecken und insbesondere vor dem Umlegen zu einer einzigen Ausnehmung ergänzen.

Hierdurch kann erzielt werden, daß das Material des Bundes beim späteren Pressen des Bundes zur Optimierung der Bunddicke so fließt, daß im optimalen Fall nach dem Pressen die Ausnehmungen nicht mehr vorhanden sind.

D. h., die Ausnehmungen sind vorzugsweise so gestaltet, daß sie durch das fließende Material beim Optimieren der Bunddicke vollständig wiederum ausgefüllt werden. Es wird hierdurch erzielt, daß ein Pressen des Werkstoffs des Bundes ermöglicht wird, ohne daß der Bund durch das Pressen die Ringform seines Außenumfanges verliert, der sich koaxial zum hohlzylindrischen Abschnitt der Buchse erstreckt.

Durch Anwendung dieses Verfahrens kann die Wandstärkentoleranz, die erzielt werden kann, ohne die Form des Bundes zu gefährden, um 50 % verbessert werden.

Es entsteht insbesondere eine Bundbuchse, insbesondere für ein Gleitlager, wobei die Bundbuchse aus einem Bandabschnitt gerollt ist und auf einer oder beiden Seiten der hohlzylindrischen Buchse ein Bund umgelegt ist, wobei am Außenumfang des Bundes im Bereich der Stoßfuge eine oder mehrere Ausnehmungen vorgesehen sind. Die Ausnehmungen können wiederum symmetrisch auf beiden Seiten der Stoßfuge angeordnet sein und sich bis in die Stoßfuge hineinerstrecken.

Es kann insbesondere vorgesehen sein, daß die Bundbuchse aus einem Gleitlagerwerkstoff besteht, wobei sowohl metallische als auch Verbundwerkstoffe aus Metall und Kunststoff Verwendung finden können.

Es kann dabei vorgesehen sein, daß sich die Ausnehmung in Umfangsrichtung vor dem Pressen über das 1- bis 6-fache der Dicke des Bandabschnittes erstreckt und in axialer Richtung über das 0,1- bis 2-fach des Bandabschnittes.

Die Ausnehmung kann dabei einen Boden besitzen, der parallel zum oberen Rand bzw. zur oberen Kante der Bundbuchse vor dem Umlegen des Bundes verläuft. Die Seiten der Ausnehmungen können dabei in einem Winkel < 90° "also schräg" vom Boden der Ausnehmung zur oberen Kante verlaufen.

Alternativ sind jedoch auch Ausnehmungen denkbar, wobei der Boden der Ausnehmung ein Winkel zwischen 1° und 10° zur Horizontalen einnimmt und die Seiten der Ausnehmung einen Radius von 0,1 bis 1 aufweisen und in dieser Form zur oberen

Kante verlaufen.

Eine weitere Ausgestaltung kann derart gestaltet sein, dass der Boden der Ausnehmung parallel zur oberen Kante verläuft, die Ausnehmung jedoch im Bereich der Stoßfuge derart gestaltet ist, dass sich beide Ausnehmungen im Bereich der Stoßfuge zu einem V ergänzen. Darüberhinaus oder alternativ kann vorgesehen sein, dass an dem von der Stoßfuge abgewandten Ende der Ausnehmung die Ausnehmung einer Einkerbung aufweist, die in Richtung der Längsachse mindestens eine Tiefe vom 0,25-fachen der Dicke des Bandabschnittes aufweist und ebenfalls in Umfangsrichtung eine Breite von mindestens dem 0,25-fachen der Banddicke besitzt.

Weitere Vorteile und Merkmale der Erfindung ergeben sich aus den übrigen Anmeldungsunterlagen.

Ein Ausführungsbeispiel soll im folgenden anhand der Zeichnung näher erläutert werden.

Dabei zeigen:
- Figur 1: eine gerollte hohlzylindrische Buchse,
- Figur 2: eine Buchse nach Umlegen des Bundes,
- Figur 3: die Buchse gemäß Figur 2 in einer Draufsicht und
- Figur 4 und Figur 5: jeweils einen Ausschnitt aus einer Bundbuchse vor dem Umlegen.

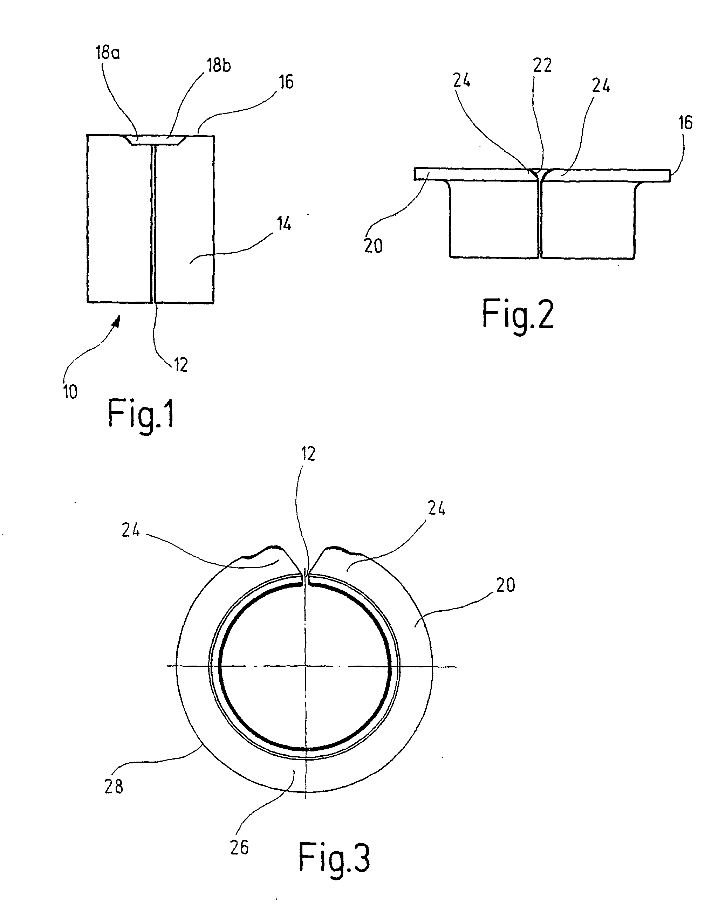

Figur 1 zeigt eine gerollte Buchse 10, wobei die Buchse 10 eine Stoßfuge 12 aufweist, an der die beiden Enden des Bandabschnittes 14, der zur Buchse 10 gerollt wurde, aneinanderstoßen.

Im Bereich der Stoßfuge 12 sind an einer Längskante 16 der Buchse 10 Ausnehmungen 18a und 18b vorgesehen, die sich bis in die Stoßfuge 12 hineinerstrecken und entlang des Umfanges der Kante 16 verlaufen. Die Ausnehmungen 18a und 18b, die sich in Umfangsrichtung erstrecken, sind symmetrisch auf beiden Seiten der Stoßfuge 12 angeordnet und ergänzen sich vor dem Umlegen des Bundes zu einer einzigen Ausnehmung. Die Ausnehmungen 18a und 18b befinden sich dabei an der Kante 16, die später den Außenumfang eines Bundes 20 bildet und erstrecken sich ausgehend von dieser Kante 16 in axialer Richtung.

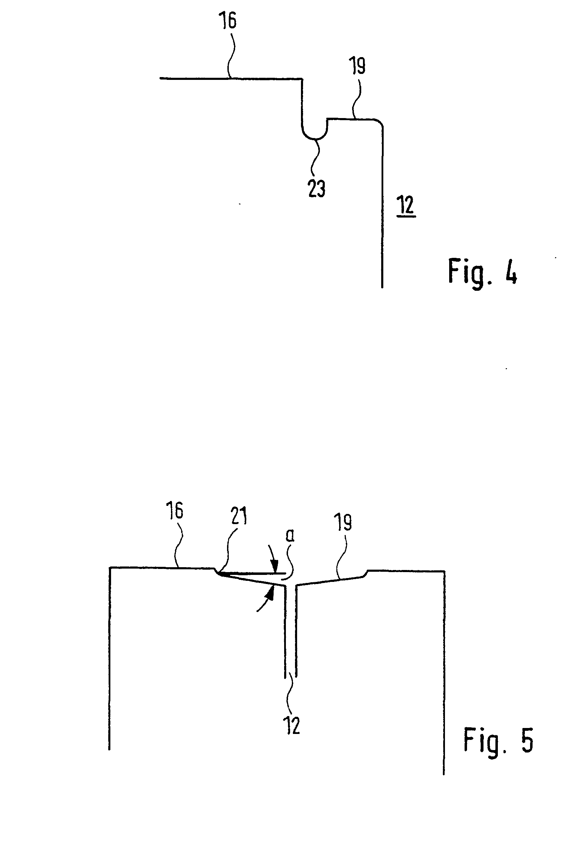

In Figur 2 ist nun die obere Kante 16 zur Bildung eines Bundes 20 umgelegt worden. Die Stoßfuge 12 hat sich dabei im Bereich des Bundes 20 V-förmig 22 erweitert. Durch das V-förmige Spreizen des Bundes 20 im Bereich der Stoßfuge 12 beim Vorgang des Umlegens wird das Material 24 des Bundes 20 im an die Stoßfuge 12 angrenzenden Bereich weniger stark gedehnt als das Material 26 (Figur 3) an der der Stoßfuge 12 gegenüberliegenden Seite des Bundes 20. Das Bundmaterial 24 weist dadurch nach dem Umlegen des Bundes 20 eine größere Dicke auf als das Bundmaterial 26 auf der gegenüberliegenden Seite des Bundes 20.

Um die Bunddicke zu vereinheitlichen und dadurch einen störungsfreien Lauf der Buchse 10 beispielsweise in einem Gleitlager sicherzustellen, wird der Bund 20 nach dem Umlegen zur Vereinheitlichung der Bunddicke gepreßt. Durch das Pressen des Bundes 20 verformt sich der Bund 20 im an die Stoßfuge 12 angrenzenden Bereich 24 und es erfolgt ein Fließvorgang des Bundmaterials 24 in radialer Richtung. Das Material 24 fließt in den Bereich der Ausnehmungen 18a und 18b und füllt diese partiell wiederum mit Material.

Die Ausnehmungen 18a und 18b sind dabei so gestaltet, daß trotz des Fließprozesses das Material 24 des Bundes 20 nicht über die gedachte Fortsetzung der Kreislinie des Außenumfanges 28 des Bundes 20 herübertritt. Eine Verletzung der Kreislinie des äußeren Umfanges 28 des Bundes 20 führt zu verschlechterten Eigenschaften eines Gleitlagers bei der Drehbewegung eines ebenen Drehgelenkes, bei der solche Bundbuchsen 10 vielfach eingesetzt werden.

Durch die Vorsehung derartiger Ausnehmungen 18a, 18b bereits beim Schneiden des Bandmaterials in die verschiedenen Bandabschnitte 14 kann auf technisch einfache Weise eine Bundbuchse 10 verwirklicht werden, bei der ohne Zerstörung der gedachten Kreislinie des Außenumfanges 28 des Bundes 20 die Bunddicke besonders gut und einfach optimiert werden kann. Es sind auf diese Weise Verbesserungen der Bunddickentoleranzen von ca. 50 % möglich.

Bei einer Dicke des Bandmaterials von ca. 1,5 mm können sich dabei die Ausnehmungen 18a, 18b in Umfangsrichtung je ca. 6 mm auf jeder Seite der Stoßfuge 12 erstrecken. In axialer Richtung entspricht die Erstreckung der Ausnehmungen 18a und 18b jeweils in etwa der Bandmaterialdicke.

Alternativ zeigt Figur 4 eine Gestaltung der Ausnehmung 18, wobei der Boden 19 in einem Winkel α von 1° bis 10° zur Horizontalen verläuft und in Richtung der Stoßfuge 12 abfällt.

Desweiteren weist der Übergang 21 vom Boden 19 zur oberen Kante 16 eine Rundung mit einem Radius von 0,1 bis 1 der Dicke des Bandmaterial auf.

Figur 5 zeigt eine weitere alternative Ausgestaltung der Ausnehmung, wobei der Boden 19 der Ausnehmung hier parallel zur Kante 16 der Bundbuchse vor dem Umlegen verläuft.

Im Übergangsbereich zwischen Boden 19 und Kante 16 weist der Boden 19 eine Einkerbung 23 auf, die in Breite sowie Höhe wenigstens dem 0,25-fachen der Dicke des Bandmaterials entspricht. Die Einkerbung 23 bzw. der Einstich ist verrundet ausgebildet.

Auch hier weist die Gesamtausnehmung 18 eine Länge des ca. 1 bis 6-fachen der Bandmaterialdicke auf und die Tiefe der Ausnehmung in Längsrichtung der Bundbuchse 10 entspricht dem 0,1 bis 2-fachen der Dicke des Bandmaterials. Bei der Länge der Ausnehmung ist die Breite der Einkerbung 23 mit berücksichtigt. In Längsrichtung erstreckt sich die Ausnehmung des 0,1 bis 2-fachen bis zum Boden 19 und darüber hinaus im Bereich der Einkerbung um nocheinmal das mindestens 0,25-fache der Bandmaterialdicke.

Im unmittelbaren Bereich der Stoßfuge 12 ist der Boden in Richtung auf die Stoßfuge 12 leicht abgeschrägt.

## Patentansprüche

1. Verfahren zur Herstellung einer Bundbuchse, insbesondere für eine Gleitlagerung, wobei ein Bandmaterial entsprechend dem späteren Umfang der Bundbuchse (10) abgelängt wird und der entstehende Bandabschnitt (14) zu einer hohlzylindrischen Buchse (10) mit einer Stoßfuge (12) gerollt wird und nach dem Rollen ein- oder beidseitig ein Bund (20) umgelegt wird, wobei sich die Stoßfuge (12) im Bereich des Bundes (20) zu einem V-förmigen Schlitz (22) erweitert, wobei im Bereich der späteren Stoßfuge (12) eine oder mehrere Ausnehmungen (18a, 18b) angebracht werden, **dadurch gekennzeichnet, dass** die Ausnehmungen (18a, 18b)an einer oder beiden Längskanten (16) eines Bandabschnittes (14), die später den Außenumfang des Bundes (20) bilden, angebracht werden und sich ausgehend von der Stoßfuge (12) in Umfangsrichtung erstrecken.

2. Verfahren nach Anspruch 1, **dadurch gekennzeichnet, dass** der Bund (20) nach dem Umlegen zur Vereinheitlichung der Bunddicke gepresst wird.

3. Verfahren nach Anspruch 1 oder 2, **dadurch gekennzeichnet, dass** die Ausnehmungen (18a, 18b) so angeordnet werden, dass sie im gerollten Zustand der hohlzylindrischen Buchse (10) symmetrisch auf beiden Seiten der Stoßfuge (12) vorliegen.

4. Verfahren nach einem der vorangehenden Ansprüche 2 oder 3, **dadurch gekennzeichnet, dass** der Werkstoff, der im Bereich der Ausnehmungen (18a, 18b) beim Pressen fließt, nicht über die gedachte Fortsetzung einer Kreislinie des Außenumfanges des Bundes (20) herübertritt.

5. Verfahren nach Anspruch 4, **dadurch gekennzeichnet, dass** der Bund (20) nach dem Pressen im Wesentlichen eine Ringform erhält

6. Verfahren nach einem der Ansprüche 1 bis 5, **dadurch gekennzeichnet, dass** sich die Ausnehmungen (18a, 18b) bis in die Stoßfuge (12) hineinerstrecken.

7. Verfahren nach einem der vorangehenden Ansprüche, **dadurch gekennzeichnet, dass** sich die Ausnehmungen (18a, 18b) in Umfangsrichtung vor einem Pressen des Bundes (20) zur Bunddickenvereinheitlichung über das 1- bis 6-fache der Dicke des Bandabschnittes (14) erstrecken.

8. Verfahren nach einem der vorangehenden Ansprüche, **dadurch gekennzeichnet, dass** sich die Ausnehmungen (18a, 18b) vor dem Pressen des Bundes (20) zur Bunddickenvereinheitlichung in axialer Richtung über das 0,1- bis 2-fache der Dicke des Bandabschnittes (14) erstrecken.

9. Verfahren nach einem der vorangehenden Ansprüche, **dadurch gekennzeichnet, dass** die Ausnehmungen (18a, 18b) durch das Pressen des Bundes im Wesentlichen ausgefüllt werden.

## Claims

1. Method for producing a flange sleeve, in particular for a slide bearing, wherein a band material is cut to length to correspond to the later circumference of the flange sleeve (10), and the resultant band portion (14) is rolled up into a hollow-cylindrical sleeve (10) with a butt joint (12), and after the rolling, a flange (20) is flanged over on one or both sides, the butt joint (12) widening in the region of the flange (20) to form a V-shaped slit (22), one or more recesses (18a, 18b) being provided in the region of the later butt joint (12), **characterised in that** the recesses (18a, 18b) are provided on one or both longitudinal edges (16) of a band portion (14), which longitudinal edges later form the outer circumference of the flange (20), and extend from the butt joint (12) in the circumferential direction.

2. Method according to claim 1, **characterised in that** after being flanged over, the flange (20) is pressed in order to make the flange thickness uniform.

3. Method according to either claim 1 or claim 2, **characterised in that** the recesses (18a, 18b) are arranged such that in the rolled-up state of the hollow-cylindrical sleeve (10), said recesses are disposed symmetrically on both sides of the butt joint (12).

4. Method according to either claim 2 or claim 3, **characterised in that** the material, which flows in the region of the recesses (18a, 18b) during pressing, does not extend beyond the notional continuation of a circular line of the outer circumference of the flange (20).

5. Method according to claim 4, **characterised in that** the flange (20) assumes a substantially annular shape after pressing.

6. Method according to any one claims 1 to 5, **characterised in that** the recesses (18a, 18b) extend into the butt joint (12).

7. Method according to any one of the preceding claims, **characterised in that**, before pressing the flange (20), the recesses (18a, 18b) extend in the circumferential direction over a length ranging from 1 to 6 times the thickness of the band portion (14) to make the flange thickness uniform.

8. Method according to any one of the preceding claims, **characterised in that**, before pressing the flange (20), the recesses (18a, 18b) extend in the axial direction over a length ranging from 0.1 to twice the thickness of the band portion (14) to make the flange thickness uniform.

9. Method according to any one of the preceding claims, **characterised in that** the recesses (18a, 18b) are substantially filled in as a result of the pressing of the flange.

## Revendications

1. Procédé de fabrication d'une douille à collerette, notamment pour un palier lisse, dans lequel un feuillard est découpé à une longueur correspondant à la future circonférence de la douille à collerette (10) et le tronçon de feuillard ainsi formé (14) est enroulé pour former une douille cylindrique creuse (10) à joint vif (12) et, après l'enroulement, une collerette (20) est repliée d'un côté ou des deux côtés, le joint vif (12) s'élargissant dans la zone de la collerette (20) pour former une fente en V (22) et un ou plusieurs évidements (18a, 18b) étant ménagés dans la zone du futur joint vif (12), **caractérisé en ce que** les évidements (18a, 18b) sont ménagés sur une ou sur les deux arêtes longitudinales (16) d'un tronçon de feuillard (14), qui formeront ultérieurement la périphérie externe de la collerette (20), et s'étendent dans la direction périphérique à partir du joint vif (12).

2. Procédé selon la revendication 1, **caractérisé en ce qu'**une fois repliée la collerette (20) est pressée pour en uniformiser l'épaisseur.

3. Procédé selon la revendication 1 ou la revendication 2, **caractérisé en ce que** les évidements (18a, 18b) sont agencés de telle façon que, lorsque la douille cylindrique creuse (10) est à l'état enroulé, ils sont disposés symétriquement des deux côtés du joint vif (12).

4. Procédé selon l'une quelconque des revendications 2 et 3, **caractérisé en ce que** le matériau qui est refoulé au niveau des évidements (18a, 18b) lors du pressage ne dépasse pas le prolongement imaginaire d'un cercle délimitant la périphérie externe de la collerette (20).

5. Procédé selon la revendication 4, **caractérisé en ce que** la collerette (20) acquiert une fois pressée une forme sensiblement annulaire.

6. Procédé selon l'une quelconque des revendications 1 à 5, **caractérisé en ce que** les évidements (18a, 18b) s'étendent jusqu'au joint vif (12).

7. Procédé selon l'une quelconque des revendications précédentes, **caractérisé en ce que** les évidements (18a, 18b), avant le pressage de la collerette (20) destiné à uniformiser son épaisseur, s'étendent dans la direction périphérique sur 1 à 6 fois l'épaisseur du tronçon de feuillard (14).

8. Procédé selon l'une quelconque des revendications précédentes, **caractérisé en ce que** les évidements (18a, 18b), avant le pressage de la collerette (20) destiné à uniformiser son épaisseur, s'étendent dans la direction axiale sur 0,1 à 2 fois l'épaisseur du tronçon de feuillard (14).

9. Procédé selon l'une quelconque des revendications précédentes, **caractérisé en ce que** les évidements (18a, 18b) sont sensiblement comblés suite au pressage de la collerette.
